# EUROPEAN PATENT APPLICATION

(11) **EP 2 961 174 A1**
(43) Date of publication of application: **30.12.2015**
(21) Application number: 15173369.8
(22) Date of filing: 23.06.2015
(51) Int. Cl.: H04N 21/431, H04N 5/76

(54) **REPRODUCTION DEVICE, DISPLAY DEVICE, AND DISPLAY CONTROL METHOD**

(30) Priority: 23.06.2014 JP 2014128080
(71) Applicant: Funai Electric Co., Ltd., Daito city Osaka 574-0013 (JP)
(72) Inventor: Takaki, Kentaro, Osaka, Osaka 574-0013 (JP)
(74) Representative: Osha Liang

(57) **Abstract**

A reproduction device (1) configured to be connected to an external display device (40) and comprising a controller (10) configured to extract first additional information included in a content and that satisfies a first condition from among additional information included in a plurality of contents recorded in a recording medium (30a), create display data arranging, in a first direction, the first additional information, and the first condition associated with the first additional information, and transmit the display data to the external display device (40).

## Description

### [Technical Field]

The present invention relates generally to a reproduction device, a display device, and a display control method.

### [Background Art]

A recording and reproduction device such as a hard disk recorder displays recorded television programs (content) in a list according to the date recorded. A user searches for the television program to be played from the recorded list in order of date recorded by using a cursor key or the like. Further known is a recording and reproduction device having a function that sorts the recorded television programs into separate folders.

The recording and reproduction device disclosed in Patent Literature 1 analyzes preference information that indicates programs that the user likes, searches for programs that have program information matching the analyzed preference information, reserves and records extracted programs, and displays a list of recorded programs vertically and horizontally. This recording and reproduction device records matching preference information in association with each other when the extracted programs are recorded, and displays all the preference information that has been associated and recorded when displaying the recorded programs in a list.

### [Citation List]

### [Patent Literature]

[Patent Literature 1] Japanese Unexamined Patent Application Publication No. 2006-325011

### [Summary of the Invention]

However, the preference information and the recorded programs are merely displayed vertically and horizontally without any relation to each other. Because of this, to search for a desired program, a troublesome operation such as changing pages in the list with a cursor key is required. This commonly happens in various display systems and display control devices included in display systems.

According to one embodiment of the invention, an operation for selecting content becomes easier.

A display control device according to one or more embodiments of the present invention may comprise extracting means for extracting additional information that satisfies a plurality of conditions for an extraction object from among additional information added to content recorded in a recording medium, and list display control means for displaying on a display unit an additional information column where extracted additional information is arranged in a first predetermined direction for each condition and an additional information list arranged in a second predetermined direction different from the first predetermined direction. The "additional information" may be a singular piece of information or a multiple pieces of information.

Further, a display control method according to one or more embodiments of the present invention may extract additional information that satisfy a plurality of conditions for an extraction object from among additional information added to content recorded in a recording medium, and display on a display unit an additional information column where extracted additional information is arranged in a first predetermined direction for each condition and an additional information list arranged in a second predetermined direction different from the first predetermined direction.

Furthermore, a display control program according to one or more embodiments of the present invention may realize, in a computer, an extracting function for extracting additional information that satisfies a plurality of conditions for an extraction object from among additional information added to content recorded in a recording medium, and a list display control function for displaying on a display unit an additional information column where extracted additional information is arranged in a first predetermined direction for each condition and an additional information list arranged in a second predetermined direction different from the first predetermined direction. A reproduction device according to one or more embodiments comprises a connector configured to connect the reproduction device with an external display device; and a controller configured to extract first additional information included in a content and that satisfies a first condition from among additional information included in a plurality of contents recorded in a recording medium, create display data arranging, in a first direction, the first additional information, and the first condition associated with the first additional information, and transmit the display data to the external display device. In one or more embodiment of the reproduction device, the first additional information is arranged in a substantially vertical direction with respect to the first condition. In one or more embodiment of the reproduction device, the controller creates the additional information list in which:
the first additional information is arranged in a substantially vertical direction with respect to the first condition,
the second condition is arranged in a substantially horizontal direction with respect to the first condition, and
the second additional information is arranged in the substantially vertical direction with respect to the second condition.
A display device according to one or more embodiments comprises a display portion that displays first additional information included in a content and that satisfies a first condition, and the first condition associated with the first additional information, wherein the first additional information is arranged in a first direction.
In one or more embodiment of the display device, the first additional information is arranged in a substantially vertical direction with respect to the first condition.
In one or more embodiment of the display device, the display portion displays an additional information list in which:
the first additional information is arranged in a substantially vertical direction with respect to the first condition,
the second condition is arranged in a substantially horizontal direction with respect to the first condition, and
the second additional information is arranged in the substantially vertical direction with respect to the second condition.
A display control method according to one or more embodiments comprises extracting first additional information included in a content and that satisfies a first condition from among additional information included in a plurality of contents recorded in a recording medium; creating display data arranging, in a first direction, the first additional information, and the first condition associated with the first additional information; and transmitting the display data to an external display device.
In one or more embodiment of the display control method, the first additional information is arranged in a substantially vertical direction with respect to the first condition.
Further embodiments of the above-mentioned reproduction device, display device and display control method are defined in the dependent claims.
One or more embodiments of the display control method may be implemented using instructions executed by one or more processors of the reproduction device. Further, such instructions may correspond to computer readable instructions that are stored on one or more non-transitory computer readable media. The computer readable instructions stored on the non-transitory computer readable medium / media comprise instructions which, when executed by a processor, may perform one or more steps of any method and / or any embodiment disclosed herein.
Unless otherwise stated, various aspects and features of one or more embodiments described herein may be practiced separately or combined together.

One embodiment of the invention make an operation for selecting content easier.
At least one embodiment of the invention renders an operation for selecting a content quicker.
At least one embodiment of the invention reduces the quantity of display data to be sent to a display device for performing an operation for selecting a content.
At least one embodiment of the invention produces filtered and ordered display data to be displayed on a display device so as to optimize the use of a limited display portion area of the display device.
One embodiment of the invention make an operation for selecting content additionally easier.
One embodiment of the invention improve the comfort of the operation for selecting a recorded content.
One embodiment of the invention make creating an additional information list according to the preferences of the user easier.

### [Brief Description of Drawings]

FIG. 1 is a block diagram schematically illustrating a configuration example of a display system included in the display control device 1 according to one or more embodiments of the present invention.
FIG. 2 is a diagram schematically illustrating a configuration example of information recorded in the recording medium 30a according to one or more embodiments of the present invention.
FIG. 3 is a flowchart illustrating a first example of a content selection execution process that accepts processing after displaying an additional information list according to one or more embodiments of the present invention.
FIG. 4 is a diagram schematically illustrating a configuration example of an additional information list according to one or more embodiments of the present invention.
FIG. 5 is a diagram schematically illustrating a display screen example of an additional information list according to one or more embodiments of the present invention.
FIG. 6 is a flowchart illustrating an example of a content selection execution process that selects the condition CN1 from a list of programs and displays an additional information list according to one or more embodiments of the present invention.
FIG. 7 is a flowchart illustrating a second example of a content selection execution process according to one or more embodiments of the present invention.
FIG. 8 is a flowchart illustrating a third example of a content selection execution process according to one or more embodiments of the present invention.
FIG. 9 is a flowchart illustrating a fourth example of a content selection execution process according to one or more embodiments of the present invention.
FIG. 10 is a flowchart illustrating a fifth example of a content selection execution process according to one or more embodiments of the present invention.
FIG. 11 is a diagram schematically illustrating an example of the reproduction list registration settings screen 51 according to one or more embodiments of the present invention.
FIG. 12 is a diagram schematically illustrating an example of the recording list according to one or more embodiments of the present invention.
FIG. 13 is a diagram schematically illustrating an example of the actor entry screen according to one or more embodiments of the present invention.
FIG. 14 is a diagram schematically illustrating an example of the genre selection screen according to one or more embodiments of the present invention.
FIG. 15 is a diagram schematically illustrating an example of the keyword entry screen according to one or more embodiments of the present invention.
FIG. 16 is a diagram schematically illustrating an example of the display line settings screen according to one or more embodiments of the present invention.
FIG. 17 is a flowchart illustrating a sixth example of a content selection execution process according to one or more embodiments of the present invention.
FIG. 18 is a flowchart illustrating a sixth example of the reproduction list sorting display settings screen according to one or more embodiments of the present invention.

### [Detailed Description of Embodiments of the Invention]

Embodiments of the present invention will be described below. The embodiments described below are only used to exemplify the present invention.

### (1) Summary of a display control device (or a reproduction device), display device, and display control method:

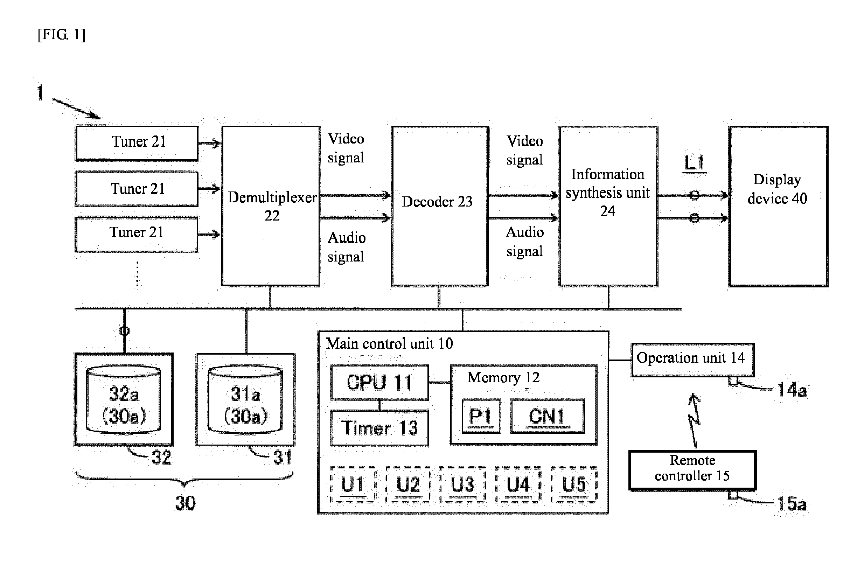

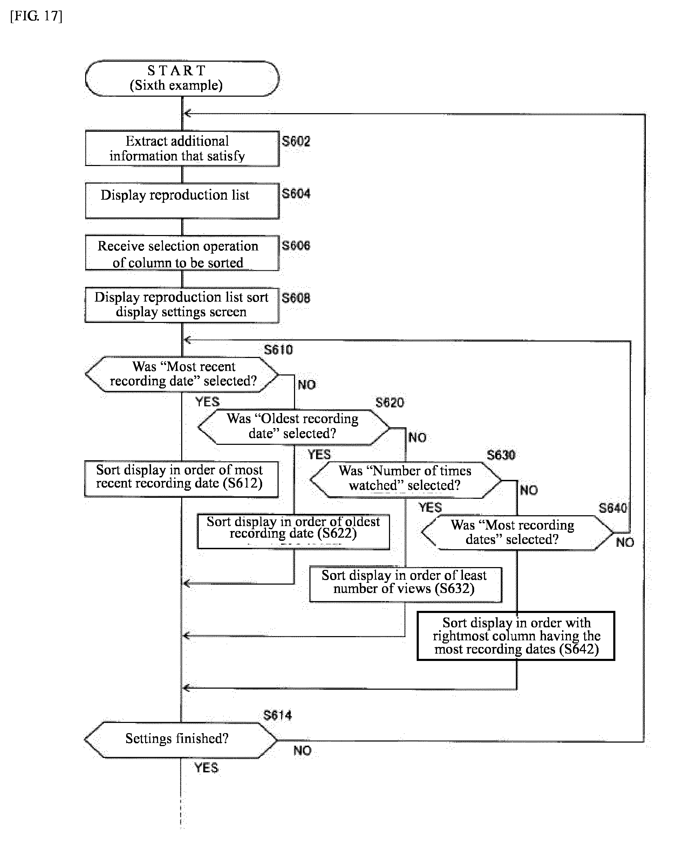

First, a summary of the display control device, display device, and display control method according to one or more embodiments of the invention will be described with reference to FIGS. 1 to 18 as necessary.

According to one or more embodiments, the display control device 1 may comprise extracting means U1 and list display control means U2 as basic elements. The extracting means U1 extracts additional information DA1 that satisfies a plurality of conditions CN1 for an extraction object from among the additional information DA1 added to content CT1 recorded in a recording medium 30a. The list display control means U2 displays on a display unit (display device 40 in FIG. 1) an additional information column L2 where extracted additional information DA1 is arranged in a first predetermined direction D1 for each condition CN1 and an additional information list L1 arranged in a second predetermined direction D2 different from the first predetermined direction D1.

With the additional information list L1 displayed in the display unit (40), the additional information column L2 is not sorted by folder to arrange the extracted additional information DA1 in a first predetermined direction D1 according to extraction object conditions CN1, but is arranged in a second predetermined direction D2. If the additional information is sorted into folders, a troublesome operation such as moving through layers of folders is necessary to search for recorded content, but in one or more embodiments, there are common conditions CN1 for extraction objects in the additional information DA1 that configures the additional information column L2, so this type of additional information string L2 is arranged in the second prescribed direction D2. As a result, the trouble in operation until a recorded content the user wishes to play is found is reduced, and it is easier for the user to find the desired recorded content CT1. Therefore, one or more embodiments of the invention can provide a display control device that can ease the operation of selecting content.
Hard disks, flash memory, Blu-ray discs (BD), digital versatile discs (DVD), compact discs (CD) and the like are included in the recording medium. In the display control device, a recording and reproduction device that can perform recording and reproduction to a recording medium, a reproduction device that can only perform reproduction to a recording medium, a display control device that is integrated with another device that is a display device, and the like are included. The display control device may be for an automobile, and may not be for an automobile.
The first predetermined direction may be a vertical or substantially vertical direction, a horizontal or substantially horizontal direction, or a diagonal or substantially diagonal direction. The second predetermined direction may be any direction as long as it is different from the first predetermined direction, and this is not limited to a direction orthogonal to the first predetermined direction such as a direction 45° to 85° from the first predetermined direction. The second predetermined direction may be a vertical or substantially vertical direction, a horizontal or substantially horizontal direction, or a diagonal or a substantially diagonal direction.

According to one or more embodiments, the list display control means U2 may display on the display unit (40) the conditions CN1 corresponding to the additional information column L2 after associating the conditions CN1 with the additional information column L2. One or more embodiments of the invention make an operation for selecting content additionally easier because the conditions CN1 that correspond to the additional information column L2 can be seen if one looks at the additional information list L1.

According to one or more embodiments, the display control device 1 may comprise a content selecting means U3 that receives a selection operation of content CT1 subject to processing from the additional information list L1. Furthermore, the display control device 1 may perform a predetermined process to the content CT1 that has been selected. One or more embodiments of the invention make an operation for selecting content additionally easier because it can perform a selection operation of content CT1 subject to processing from the additional information list L1.
A process for playing recorded content, a process for editing recorded content and the like are included in the predetermined process. A process for protecting recorded content, a process for deleting recorded content and the like are included in the process for editing recorded content.

According to one or more embodiments, when a series of a program is included in the conditions CN1, the extracting means U1 may extract additional information corresponding to programming for the series from among the additional information DA1 added to the content CT1 recorded in the recording medium 30a. One or more embodiments of the invention can improve the comfort of the operation for selecting recorded content because the additional information column L2 is displayed for each series of a program.

According to one or more embodiments, the display control device 1 may comprise a program list display control means U5 for displaying a list of programs on the display unit (40). The extracting means U1 may receive a selection operation of conditions CN1 of the additional information column L2 included in the additional information list L1 from among the list of programs displayed on the display unit (40) and extract additional information DA1 that satisfies the plurality of conditions CN1 for an extraction object including selected conditions. One or more embodiments of the invention make an operation for creating an additional information list according to the user preferences easier because it can perform a selection operation of conditions CN1 of the additional information column L2 included in the additional information list L1 from among the list of programs.
A list of recorded content, a list of content reserved for recording, an Electronic Program Guide (EPG), and the like are included in the list of programs.

According to one or more embodiments, the extracting means U1 may receive an operation entry of at least one of a program genre, an actor name, or a keyword as conditions CN1 of the additional information column L2 included in the additional information list L1 and extract additional information DA1 including the plurality of conditions CN1 for an extraction object including entered conditions. One or more embodiments of the invention make an operation for creating an additional information list according to the user preferences easier because it can perform an operation entry of at least one of a program genre, an actor name, or a keyword.

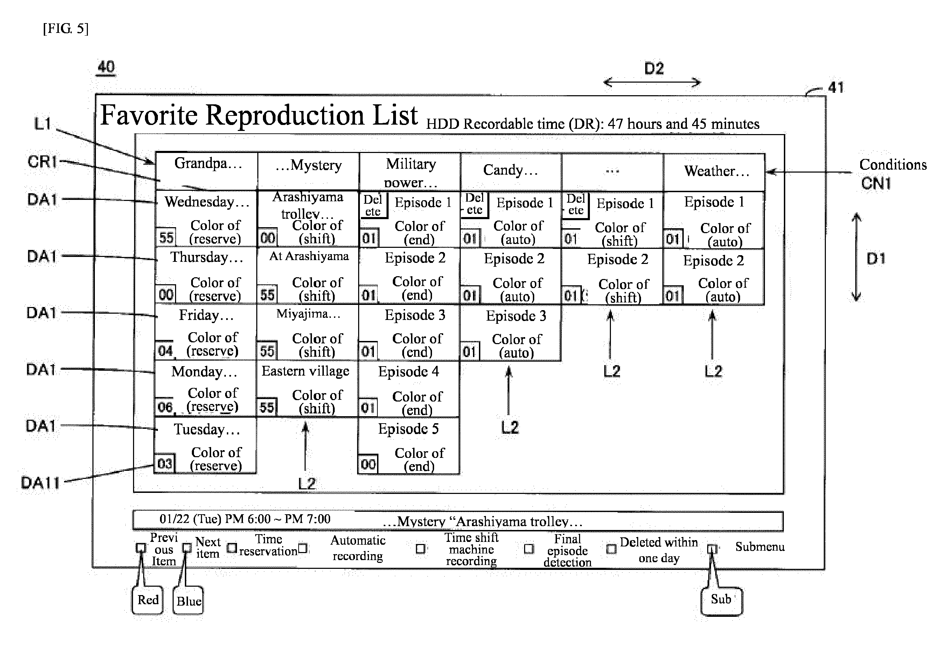

According to one or more embodiments, the list display control means U2 may display on the display unit (40) information (color signifying a last episode was detected in FIG. 5) signifying that a last episode is included when additional information DA1 that corresponds to the last episode of a program series is included in the additional information column L2 after associating said information with the additional information column L2. One or more embodiments of the invention make an operation for selecting content additionally easier because it can be known that the last episode of a program series is included if one looks at the additional information list L1.

According to one or more embodiments, recording method type information DA2 that indicates the type of recording method of the content CT1 may be associated with the content CT1 and recorded in the recording medium 30a. The list display control means U2 may display on the display unit (40) the information indicating the type of recording method of the content CT1 based on the recording method type information DA2 after associating said information with the additional information column L2. One or more embodiments of the invention make an operation for selecting content additionally easier because the type of recording method can be known if one looks at the additional information list L1.

According to one or more embodiments, the list display control means U2 may update the additional information list L1 by receiving a selection operation of sort conditions of the additional information column L2, and sorting at least one of the additional information DA1 included in the additional information column L2 and the additional information column L2 based on selected sort conditions. One or more embodiments of the invention make an operation for selecting content additionally easier because at least one of the additional information DA1 included in the additional information column L2 and the additional information column L2 is sorted.

According to one or more embodiments, a display control method that corresponds to the display control device 1 described above achieves one or more of the effects described above.

According to one or more embodiments, a display control program p1 corresponding to the display control device 1 described above also achieves one or more of the effects described above.

### (2) Description of configuration example of a display control device:

First, an example of a display control device configuration that is common to various examples described later will be described.

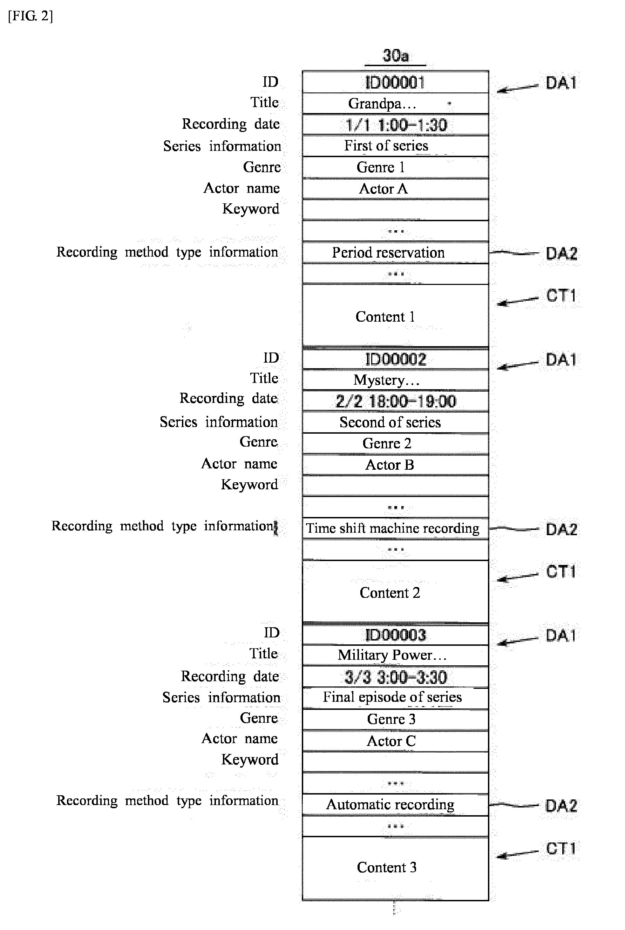

FIG. 1 schematically illustrates a configuration example of a display system included in the display control device 1 according to one or more embodiments of the present invention. FIG. 2 schematically illustrates an example of information recorded in the recording medium 30a according to one or more embodiments of the present invention. When the display control device 1 is a recording and reproduction device, the display control device 1 may be configured with, for example, elements 10, 14, 15, 21 to 24, and 31 without an external hard disk drive 32 and the display device 40 from the elements 10, 14, 15, 21 to 24, 30, 40 of the display system. In this case, a remote controller 15 and a tuner 21 are optional. When the display control device 1 is a television receiver (TV), the display control device 1 can be configured with elements 10, 14, 15, 21 to 24, 31 and 40 without an external hard disk drive 32 from among the elements of the display system. In this case, the remote controller 15 and a storage device 30 are optional. Below, a situation is described where the display control device 1 is a recording and reproduction device.

The recording and reproduction device (display device 1) illustrated in FIG. 1 may comprise a plurality of digital tuners 21, a demultiplexer 22, a decoder 23, an information synthesis unit 24, an internal hard disk drive 31, an operation unit 14, a main control unit 10, and the like. The main control unit 10 may comprise a Central Processing Unit (CPU) 11, a memory 12, a timer circuit 13 and the like. For example, a Read Only Memory (ROM), a Random Access Memory (RAM), and a re-writable nonvolatile memory (for example, a flash memory), are included in the memory 12.

Each tuner 21 receives and demodulates a digital broadcasting signal included in a transport stream (TS). With this recording and reproduction device, it is possible to arrange and record television content that was received from a plurality of designated channels in parallel simultaneously. For example, a plurality of ground digital tuners (tuners for ground digital broadcasting), a plurality of broadcasting satellites (BS) tuners (tuners for BS digital broadcasting) and a plurality of communication satellite (CS) tuners (tuners for CS broadcasting) are included in the plurality of tuners 21. Tuners other than these tuners (for example, analog tuners) may be included in the plurality of tuners 21.

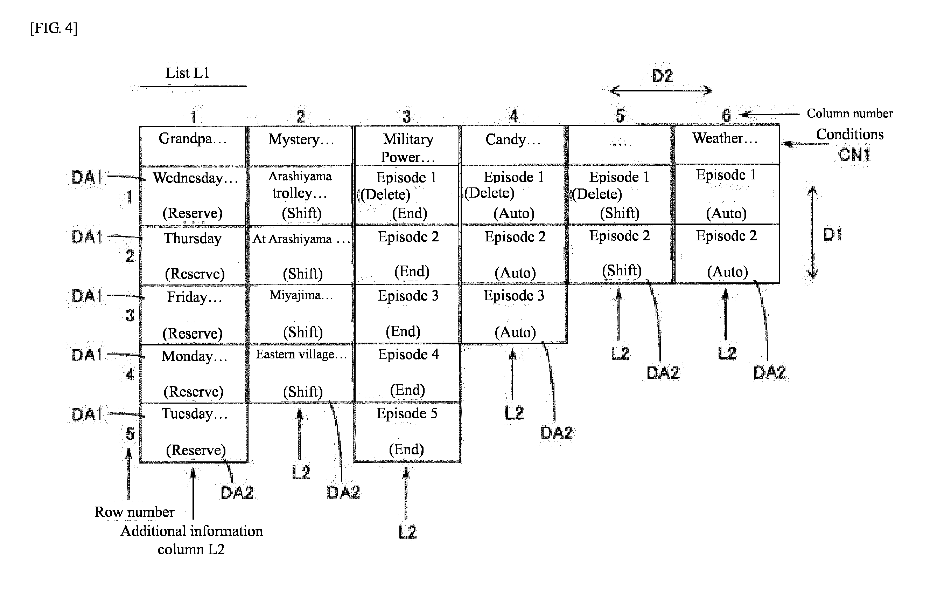

The demultiplexer 22 separates image data, audio data, and the like from a digital broadcast signal. Additional information DA1 added to the content CT1 that includes image data, audio data, and the like is included in the separated data as illustrated in FIG. 2. With the demultiplexer 22, it is also possible to extract EPG information and the like superimposed with the digital broadcast signal. The decoder 23 decodes the image data and audio data and converts them into an image signal and an audio signal. The information synthesis unit 24 synthesizes an on screen display (OSD) signal from the main control unit 10 with the image signal and synthesizes an audio synthesis signal from the main control unit 10 with the audio signal. The OSD signal carries display data to be displayed on an external instrument (display device 40 in FIG. 1). The display data comprises for example a reproduction list as illustrated in FIG. 4 or 5. The reproduction list illustrated in FIG. 5 (additional information list) L1 is superimposed to the image signal as an OSD signal. The image signal from the information synthesis unit 24 is supplied to an external instrument (display device 40 in FIG. 1) such as a TV via a connector such as a video output terminal or a video output connector. The image signal including the reproduction list L1 enters the display device 40 or the like through the video output terminal or video output connector from the information synthesis unit 24, and the reproduction list L1 is displayed on a screen 41. The audio signal from the information synthesis unit 24 is supplied to an external instrument (display device 40 in FIG. 1) such as a TV via a connector such as an audio output terminal or an audio output connector.

The internal hard disk drive 31 has a hard disk 31a that is a type of recording medium 30a. It is possible to connect an external hard disk drive 32 to this recording and reproduction device via a communication interface such as a universal serial bus (USB) interface. The external hard disk drive 32 has a hard disk 32a that is a type of recording medium 30a. The hard disk drives 31 and 32 are referred to as a storage device 30, and the hard disks 31a and 32a are referred to as a recording medium 30a.

The operation unit 14 and the remote controller 15 have a plurality of keys 14a and 15a for performing various operations such as a main unit on and off operation of the recording and reproduction device, a recording operation, a reproduction operation, and the like. The operation unit 14 may comprise a light receiving means that receives a light signal indicating an operation command from the remote controller 15. Through this light receiving means, the light signal is transformed to an electronic signal, a command signal is output to the main control unit 10, and the operation unit 14 is provided on the front face of the main body of the recording and reproduction device.

The main control unit 10 controls each of the components based on the CPU 11 that performs processes for the entirety of the recording and reproduction device based on a program or information stored in the memory 12. The display control program p1 and the conditions CN1 of the present technique are written to the memory 12. The main control unit 10 can be configured with a circuit comprised mainly of a large scale integration (LSI). For example, the main control unit 10 performs a control that stores the content CT1 or the like from the demultiplexer 22 in the storage device 30, a control that plays the content CT1 or the like from the storage device 30 and the like. The main control unit 10 configures the extracting means U1, the list display control means U2, the content selecting means U3, a content processing means U4, and the program list display control means U5. The display control program p1 achieves in a computer the extracting function, list display control function, content selecting function, content processing function, and program list display control function corresponding to these means U1 to U5.

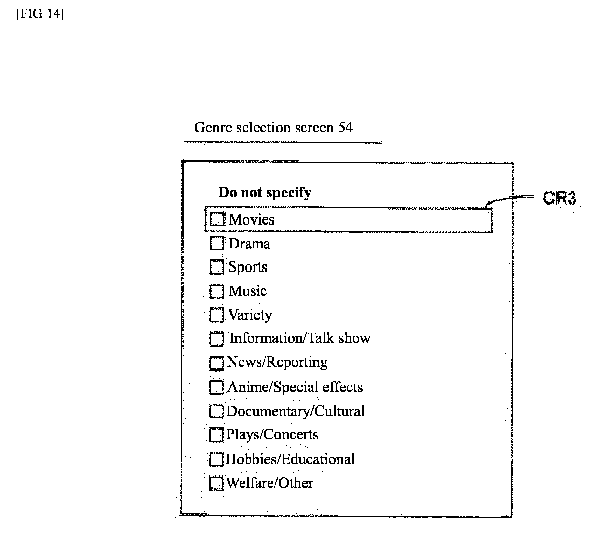

The plurality of contents CT1 and the additional information DA1 added to each of the contents CT1 are recorded in the recording medium 30a illustrated in FIG. 2. Identification information (ID) of the content CT1, a title, a recording date, series information indicating a program series, a genre, an actor name, an input keyword and the like are included in the additional information DA1. Furthermore, recording method type information DA2 that indicates the type of recording method of the content CT1 is also recorded in the recording medium 30a after being associated with the content CT1. A program series refers to a group of continual programs having similar content broadcast multiple times. As shown in FIG. 14, a genre refers to a similar field such as "movies", "drama" and the like.

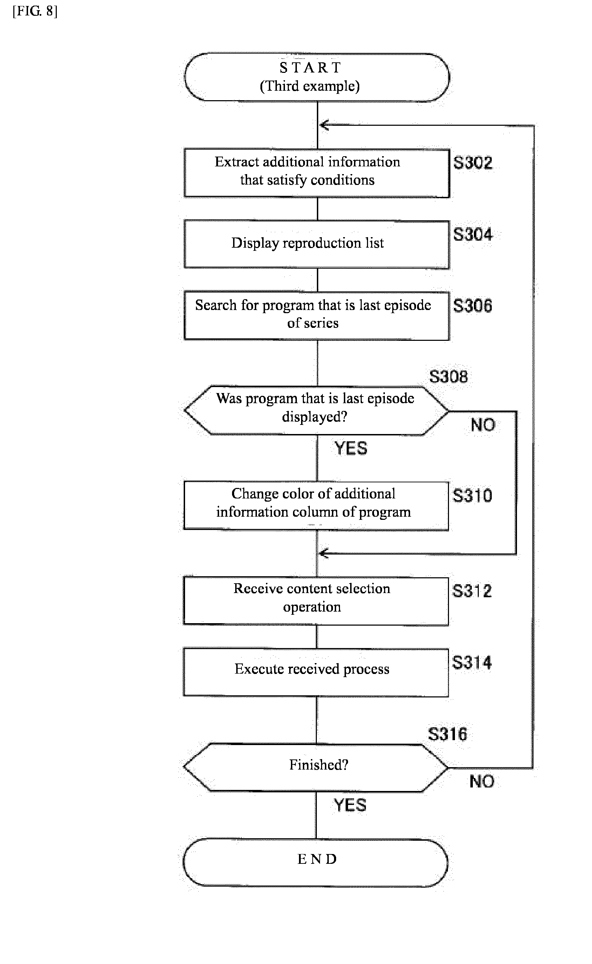

(3) First example of a display control device, display device, and display control method:

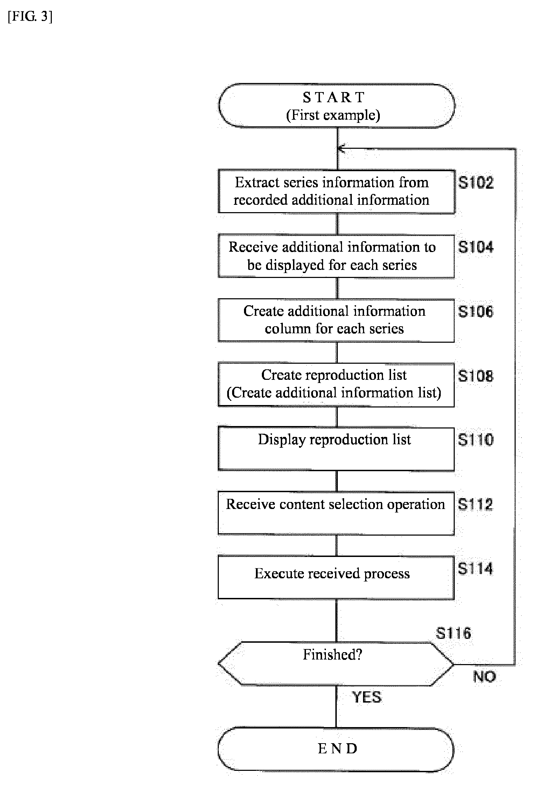

FIG. 3 shows a first example of a content selection execution process that receives processing after displaying the reproduction list L1 arranged in additional information columns for each series according to one or more embodiments of the present invention. This process is performed mainly with the main control unit 10. FIG. 4 schematically illustrates a configuration example of the reproduction list L1 according to one or more embodiments of the present invention. FIG. 5 schematically illustrates a display screen example of the reproduction list L1 according to one or more embodiments of the present invention. In one or more embodiments of the first example, all programs recorded based on desired recording reservation settings such as a periodic reservation for continually recording the same period of time on a predetermined day of the week, an automatic recording for automatically recording programs found with conditions such as genre, actor name and keyword, and the like, are displayed in a list. An extremely comfortable reproduction operation is possible because the programs to be watched are nearly all decided.
The process shown in FIG. 3 is performed by receiving an operation that displays the reproduction list L1 by, for example, the operation unit 14 and the keys 14a and 15a of the remote controller 15. One operation of a list display key provided on the keys 14a and 15a may be received. The same is the case with the processes shown in FIGS. 8 to 10, and 17. The process shown in FIG. 3 is performed in parallel with another process through multi-tasking.
The same is the case with all examples from the second example onward. Steps S102 to S104 correspond to the extracting means U1, steps S106 to S110 correspond to the list display control means U2, step S112 corresponds to the content selecting means U3, and step S114 corresponds to the content processing means U4. The word "step" will be omitted hereinafter.

When processing begins, the main control unit 10 extracts series information from the additional information DA1 added to the content CT1 recorded in the recording medium 30a as shown in FIG. 2 (S102). This series information is the conditions CN1 of the extracted object. In S104, the additional information DA1 for displaying a corresponding program of a series is extracting based on extracted series information.
In FIG. 4, it is illustrated that "Grandpa...", "...Mystery", and the like have been extracted as series information, additional information DA1 that displays subtitles about the "Grandpa..." series such as "Wednesday...", "Thursday..." and the like has been received, and additional information DA1 that displays subtitles about the "Mystery..." series such as "Arashiyama Trolley...", "At Arashiyama..." and the like has been received. In this manner, additional information DA1 that satisfies a plurality of conditions CN1 for an extracted object from among the additional information DA1 is extracted.

In S106, the additional information column L2 is created by arranging the various extracted additional information DA1 in the vertical direction of the display (first predetermined direction D1) for each series, and series information (conditions CN1) corresponding to the additional information column L2 is associated with the additional information column L2. In FIG. 4, it is illustrated that the additional information column L2 is created with the additional information DA1 for five programs of the "Grandpa..." series arranged in the vertical direction, and the "Grandpa..." series corresponding to this additional information column L2 is associated with the additional information column L2. Furthermore, it is illustrated that the additional information column L2 is created with the additional information DA1 for four programs of the "Mystery..." series arranged in the vertical direction, and the "Mystery..." series corresponding to this additional information column L2 is associated with the additional information column L2.

In S108, the reproduction list L1 is created by arranging the additional information column L2 in the horizontal direction of the display (second predetermined direction D2). As illustrated in FIG. 4, the reproduction list L1 is a list with the additional information column L2 arranged in the horizontal direction of the display (D2), the additional information column L2 having the extracted additional information DA1 arranged in the vertical directional of the display (D1) for each condition CN1. In S110, the OSD signal for displaying the reproduction list L1 is output to the information synthesis unit 24, and the reproduction list L1 such as that illustrated in FIG. 5 is displayed on the display device 40 including a display portion. Series that correspond to the additional information column L2 is associated with each additional information column L2 of the reproduction list L1. As illustrated in FIG. 5, a view count DA11 may be attached to each program.

In S112, a selection operation of content CT1 of a processed object from the displayed reproduction list L1 is received. This selection operation receives by, for example, moving a cursor CR1 provided on the reproduction list L1 using the operation unit 14 or a cursor key of the remote controller 15 and pressing a confirmation key. In S 114, a predetermined process is performed on the content CT1 that has been selected. For example, when a reproduction key of the operation unit 14 or the remote controller 15 is operated as illustrated in FIG. 5, the content of "Arashiyama Trolley..." is played. When an edit key of the operation unit 14 or the remote controller 15 is operated, an edit screen not in the drawings is displayed, and the content of "Arashiyama Trolley" can be protected or deleted.

In S116, it is determined whether or not the content selection execution process will finish. For example, when a finish key of the operation unit 14 or the remote controller 15 is operated, the main control unit 10 finishes the content selection execution process. Furthermore, when a list display key of the operation unit 14 or the remote controller 15 is operated, the main control unit 10 repeats the processes of S102 to S116. For example, when some of the content CT1 is deleted in S114, the additional information DA1 of the deleted content CT1 disappears from the reproduction list L1.

As described above, there are common series that are conditions CN1 for extraction objects in the additional information DA1 that configures the additional information column L2, and it becomes easier for the user to search for the desired content because this additional information column L2 is arranged in the second predetermined direction D2. Therefore, with the present technique, an operation for selecting recording content is simple, and a comfortable operation is possible.

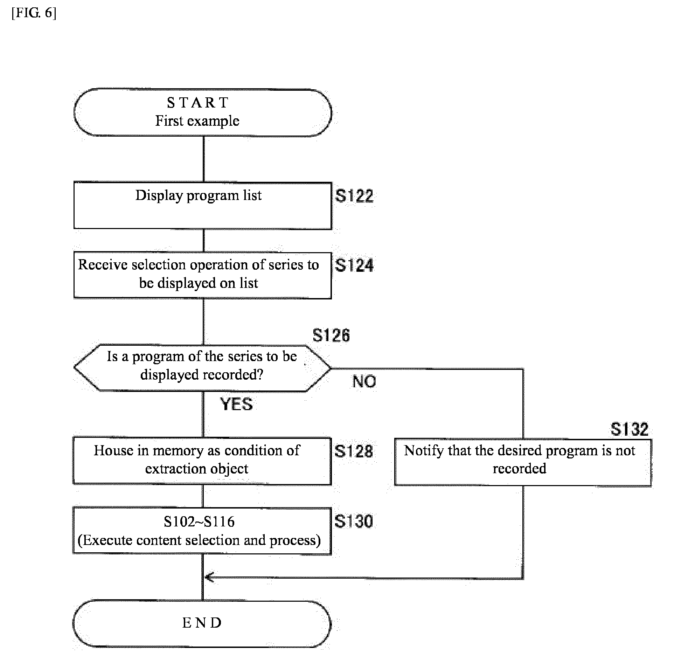

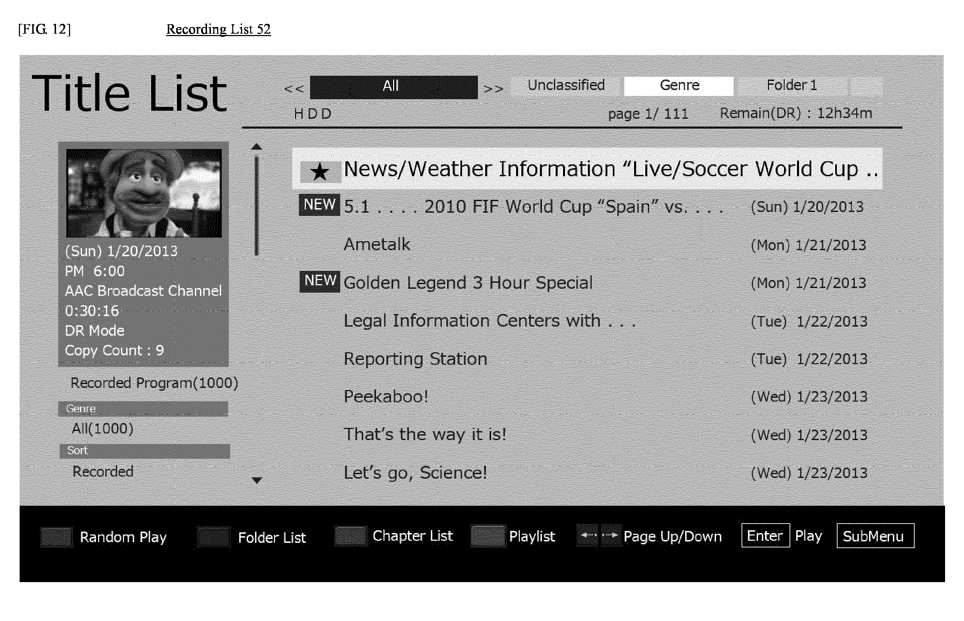

Furthermore, the reproduction list L1 may be displayed after selecting conditions CN1 from the program list as shown in FIG. 6. The content selection execution process shown in FIG. 6 is performed by receiving an operation that displays a program list by, for example, the operation unit 14 and the keys 14a and 15a of the remote controller 15. This program list may be a recording list of recorded content CT1 as shown in FIG. 12, may be a list of contents reserved for recording, and may be an EPG. S122 corresponds to the program list display control means U5, and steps S124 to S128 and S102 of FIG. 3 correspond to the extracting means U1.

When processing begins, the main control unit 10 displays the program list on the display device 40 (S122). In S124, a selection operation of programs of a series to display on the displayed reproduction list L1 is received from among the displayed program list. This selection operation receives by, for example, moving a cursor provided on the program list using the operation unit 14 or a cursor key of the remote controller 15 and pressing a confirmation key. In this manner, the main control unit 10 receives from among the displayed program list a selection operation of the conditions CN1 of the additional information column L2 included in the reproduction list L1. In step 126, it is determined whether or not programs of a series to be displayed is recorded in the recording medium 30a. When a program is recorded, the main control unit 10 houses a series of a program that has received a selection operation in the memory 12 as conditions CN1 of an extraction object (S128), performs the processes of S102 to S116 shown in FIG. 3 (S130), and finishes the process shown in FIG. 6. Next, the additional information DA1 corresponding to the selected series, that is to say the additional information DA1 that satisfies the selected conditions CN1 is extracted, the reproduction list L1 is created and displayed based on the extracted additional information DA1, and a predetermined process is performed on the selected content CT1 as necessary. When a program of a series to be displayed is not recorded in the recording medium 30a, the main control unit 10 notifies that said program is not recorded (S132) and finishes the process shown in FIG. 6. This notification process may be a process for outputting an OSD signal that displays that the program is not recorded to the information synthesis unit 24, and may be a process for outputting an audio synthesis signal that outputs audio that the program is not recorded to the information synthesis unit 24.

As described above, the specific example shown in FIG. 6 makes an operation for creating an additional information list according to the user's preferences easier because it can perform a selection operation of conditions CN1 of the additional information column L2 included in the reproduction list L1 from among the list of programs.

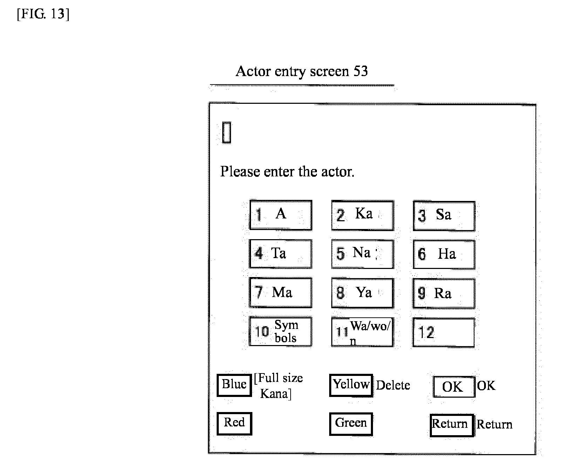

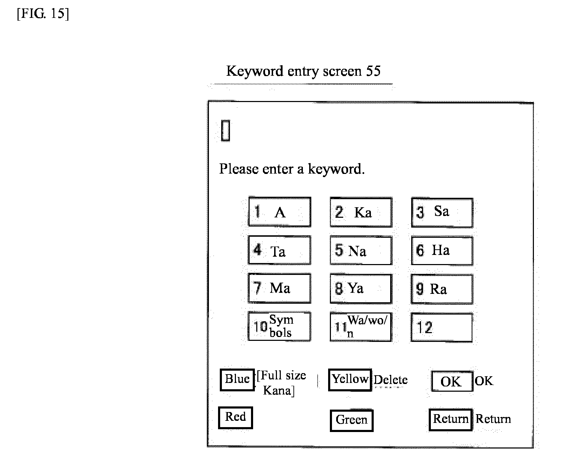

(4) Second example of a display control device, display device, and display control method:

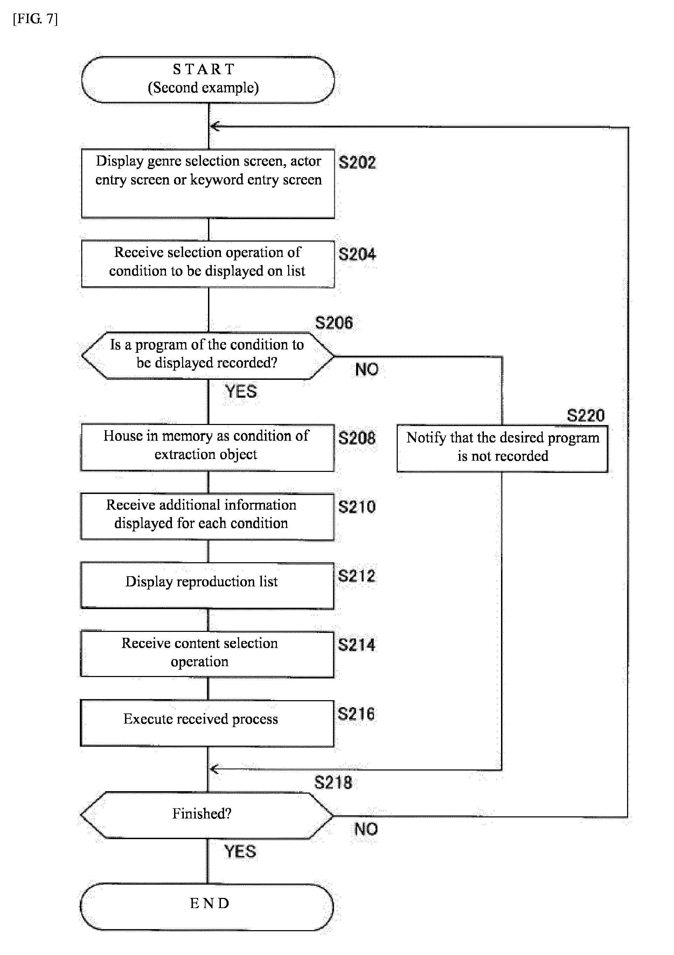

FIG. 7 illustrates a second example of a content selection execution process that is performed mainly with the main control unit 10 according to one or more embodiments of the present invention. In one or more embodiments of the second example, only programs that are captured in a genre, actor, or keyword search are displayed in a list. A fixed program can not particularly be viewed, but a configuration of a reproduction list where only programs with favorite actors or actresses appear is possible.
The process shown in FIG. 7 is performed by receiving an operation that displays a genre selection screen 54 as shown in FIG. 14, an actor entry screen 53 as shown in FIG. 13, or a keyword entry screen 55 as shown in FIG. 15 by, for example, an operation unit and the keys 14a and 15a of a remote controller. S202 to S210 correspond to the extracting means U1.

When processing begins, the main control unit 10 displays the genre selection screen 54, the actor entry screen 53, and the keyword entry screen 55 on the display device 40 (S202). These screens 53 to 55 may be switchable by an operation of the keys 14a and 15a, or may be displayed simultaneously. In S204, a selection operation of the genre, actor name, and keyword of the program to be displayed on the reproduction list 1 is received following the displayed screens 53 to 55. This selection operation receives by, for example, moving a cursor provided on the screens 53 to 55 using the operation unit 14 or a cursor key of the remote controller 15 and pressing a confirmation key. In this manner, the main control unit 10 receives an operation entry of at least one of a program genre, an actor name, or a keyword as conditions CN1 of the additional information column L2 included in the reproduction list L1.

In step 206, it is determined whether or not a program of conditions CN1 to be displayed is recorded in the recording medium 30a. When a program is recorded, the main control unit 10 houses a condition that has received a selection operation in the memory 12 as conditions CN1 of an extraction object (S208) and extracts the additional information DA1 that satisfies the conditions CN1 (S210). In S212, the reproduction list L1 is created based on the extracted additional information DA1 and displayed in the display device 40. In S214, a selection operation of the content CT1 of a processed object from the displayed reproduction list L1 is received. In S216, a predetermined process is performed on the content CT1 that has been selected. The main control unit 10 finishes the process shown in FIG. 7 when it is determined that the content selection execution process is finished, and returns the process to S202 when it is determined that the content selection execution process is not finished.

By the above, the additional information DA1 including the selected genre, actor name, or keyword, that is to say the additional information DA1 that satisfies the selected conditions CN1 is extracted, the reproduction list L1 is created and displayed based on the extracted additional information DA1, and a predetermined process is performed on the selected content CT1 as necessary.
When a program of a series to be displayed is not recorded in the recording medium 30a, the main control unit 10 outputs at least one of the OSD signal and the audio synthesis signal to the information synthesis unit 24, notifies that said program is not recorded (S220) and finishes the process shown in FIG. 7. In this manner, the main control unit 10 extracts the additional information DA1 that satisfies a plurality of conditions CN1 for an extraction object including entered conditions CN1.

This specific example makes an operation for creating an additional information list according to the user's preferences easier because it can perform an operation entry of at least one of a program genre, an actor name, or a keyword.

### (5) Third example of a display control device, display device, and display control method:

FIG. 8 illustrates a third example of a content selection execution process that is performed mainly with the main control unit 10 according to one or more embodiments of the present invention. In one or more embodiments of the third example, programs that have been determined as final episodes are displayed with the color of the column changed. By changing a display frame of the program that has been detected as a last episode, the user can be prompted to compile and write to a light disc or the like.

When processing is finished, the main control unit 10 extracts additional information DA1 that satisfies a plurality of conditions CN1 for an extraction object from among the additional information DA1 added to content CT1 recorded in the recording medium 30a (S302). Information capable of detecting series information and the like shown in FIG. 2 and a last episode of a series is included in this additional information DA1. In S304, the reproduction list L1 is created based on the extracted additional information DA1 and displayed in the display device 40. In S306, information that indicates a program is a last episode of a series is searched for in the extracted additional information DA1. In S308, it is determined whether or not the additional information DA1 of the program that is the last episode of a series is displayed, that is to say, it is determined whether or not information that indicates the last episode of a series (for example, series information that indicates a last episode) is included in the additional information DA1. When information that indicates the last episode of a series is included, the main control unit 10 changes the color of the additional information column of the program (S310).

For example, with the reproduction list L1 shown in FIG. 4, "Episode 5" of "Military Power..." is the last episode program of the series. In this case, an information "end" that indicates the last episode of a series is included in the additional information DA1 of "Episode 5" of "Military Power...". This information "end" is housed in all additional information DA1 of the additional information column including the information "end" (additional information column L2 of column number 3). With the reproduction list L1 displayed as that shown in FIG. 5, the additional information column of "Military Power" is displayed with a color that corresponds to a "last episode detection". This color is a different color than the display color of additional information without an information "end" housed.
As above, the main control unit 10 displays on the display device 40 a color (information) indicating that a last episode is included when additional information DA1 that corresponds to the last episode of a program series is included in the additional information column L2 after associating the color with the additional information column L2. In place of changing the color, the main control unit 10 may display on the display device 40 a character or symbol indicating that a last episode is included after associating the character or symbol with the additional information column L2.

In S312, a selection operation of the content CT1 of a processed object from the displayed reproduction list L1 is received. In S314, a predetermined process is performed on the content CT1 that has been selected. The main control unit 10, in S316, finishes the process shown in FIG. 8 when it is determined that the content selection execution process is finished, and returns the process to S302 when it is determined that the content selection execution process is not finished.
This specific example makes an operation for selecting content additionally easier because it can be known that the last episode of a program series is included if one looks at the reproduction list L1.

### (6) Fourth example of a display control device, display device, and display control method:

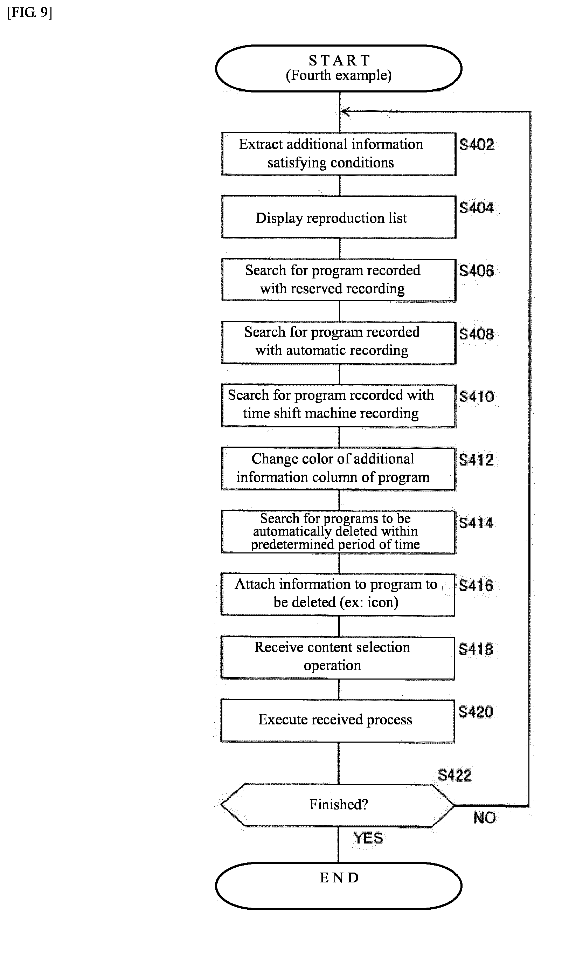

FIG. 9 illustrates a fourth example of a content selection execution process that is performed mainly with the main control unit 10 according to one or more embodiments of the present invention. In one or more embodiments of the fourth example, each displayed program is displayed in colors based on the recording method, such as reserved recording, automatic recording, time shift machine recording, and the like. Reserved recording is a recording method that records content and the like to a recording medium by a reserved recording receiving a selection operation from an EPG. Time shift machine recording is a recording method that records all programs of a specified channel. Furthermore, when automatically deleting programs starting from the oldest recording date when running out of recording storage capacity, programs that are close to deletion will be notified. There is an upper limit to the number of programs capable of being recorded at the same time. Because of this, automatic recording has a function that records in the range of the upper limit of number of programs so as to not overlap when programs are searched by a keyword or the like. Therefore, depending on the broadcasted program, there is a chance of a program that was recorded every week becoming unable to be recorded. In the fourth example, it is possible to visually confirm that there is a chance that a program recorded with automatic recording may not be recorded depending on the broadcasted program.

When processing is finished, the main control unit 10 extracts additional information DA1 including recording method type information DA2, that satisfies a plurality of conditions CN1 for an extraction object from among the additional information DA1 added to content CT1 recorded in the recording medium 30a (S402). In S404, the reproduction list L1 is created based on the extracted additional information DA1 and displayed in the display device 40 in the same manner as S304. In S406, a program recorded with reserved recording is searched for based on the extracted recording method type information DA2. In S408, a program recorded with automatic recording is searched for based on the extracted recording method type information DA2. In S410, a program recorded with time shift machine recording is searched for based on the extracted recording method type information DA2. In S412, the color of the additional information column L2 of a program searched for in S406 to S410 is changed.

For example, with the reproduction list L1 shown in FIG. 4, each program of the "Grandpa..." series is recorded with reserved recording. Each program of the "Candy..." series is recorded with automatic recording. Each program of the "...Mystery" series is recorded with time shift machine recording. In this case, "reserve", indicating a reserved recording, is included in the recording method type information DA2 of each program of the "Grandpa..." series, "auto", indicating an automatic recording, is included in the recording method type information DA2 of each program of the "Candy..." series, and "shift", indicating a time shift machine recording is included in the recording method type information DA2 of each program of the "...Mystery" series. With the reproduction list L1 displayed as that shown in FIG. 5, the additional information column of "Grandpa...." is displayed with a color that corresponds to "reserve", the additional information column of "Candy...." is displayed with a color that corresponds to "auto", and the additional information column of "...Mystery" is displayed with a color that corresponds to "shift". These colors are different than the color corresponding to a "last episode detection".
As above, the main control unit 10 displays on the display unit (40) a color (information) the type of recording method of the content CT1 based on the recording method type information DA2 after associating the color with the additional information column L2. In place of changing the color, the main control unit 10 may display on the display device 40 a character or symbol indicating the type of recording method after associating the character or symbol with the additional information column L2.

In S414, a program to be automatically deleted within a predetermined period of time (for example, one day) is searched for based on the extracted additional information DA1. For example, with an automatic recording, content not protected will be automatically deleted in order from the oldest recording date when remaining memory of the recording medium is at or below a predetermined amount. Accordingly, the date when content recorded with automatic recording will be deleted can be estimated based on recording reserving conditions, and this estimated delete date can be included in the additional information DA1. In S414, for example, a program whose estimated delete date within the additional information DA1 is within one day is searched for. In S416, information (for example, an icon) that indicates an automatic deletion within a predetermined period of time is attached to the program to be deleted that has been found.

For example, with the reproduction list L1 shown in FIG. 4, "delete", indicating that the program will be automatically deleted within a predetermined period of time, is included in the additional information DA1 of "Episode 1" of the "Candy..." series. With the reproduction list L1 displayed as that shown in FIG. 5, a "delete" icon is attached to "Episode 1" of "Candy...".

In S418, a selection operation of the content CT1 of a processed object from the displayed reproduction list L1 is received. In S420, a predetermined process is performed on the content CT1 that has been selected. The main control unit 10, in S422, finishes the process shown in FIG. 9 when it is determined that the content selection execution process is finished, and returns the process to S402 when it is determined that the content selection execution process is not finished.
This specific example makes an operation for selecting content additionally easier because the type of recording method can be known if one looks at the reproduction list L1.

### (7) Fifth example of a display control device, display device, and display control method:

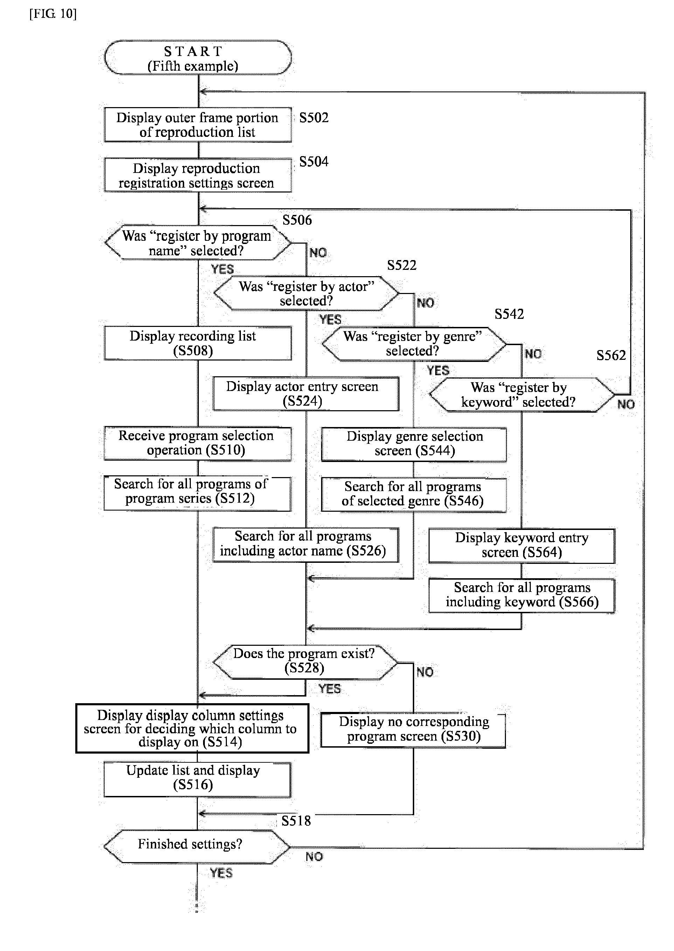

FIG. 10 illustrates a fifth example of a content selection execution process that is performed mainly with the main control unit 10 according to one or more embodiments of the present invention. With the reproduction list L1 of one or more embodiments of the fifth example, the series, genre, actor name, keyword, and the like are mixed in the conditions CN1 of the additional information column L2. As a result, a reproduction list is achieved with only frequently viewed programs.

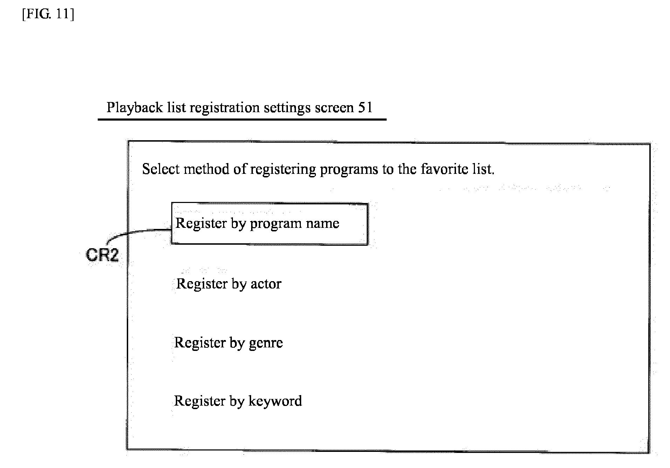

When processing begins, the main control unit 10 displays the outer frame part of the reproduction list L1 on the display device 40 (S502). In S504, a reproduction list registration settings screen 51 shown in FIG. 11 is displayed on the display device 40 in the outer frame portion. On this screen 51, "Register by program name", "Register by actor", "Register by genre", and "Register by keyword" can be selected by moving a cursor CR2 by the keys 14a and 15a. When "Register by program name" is selected (S506), the processes of S508 to S518 are performed. When "Register by actor" is selected (S522), the processes of S524 to S528, and S514 to S518 are performed. When "Register by genre" is selected (S542), the processes of S544 to S546, S528, and S514 to S518 are performed. When "Register by keyword" is selected (S562), the processes of S564 to S566, S528, and S514 to S518 are performed.

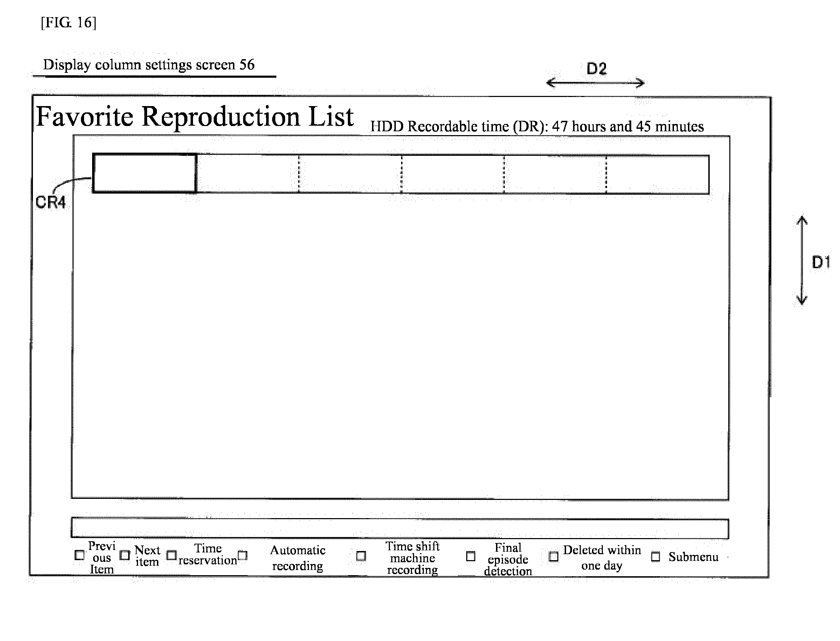

In S508 where "Register by program name" is selected, the main control unit 10 displays a recording list 52 shown in FIG. 12 on the display device 40. In S510, a selection operation of programs of a series to display on the reproduction list L1 is received from among the displayed program list of the recording list 52. In S512, all programs of a selected program series is searched for from the program list of the recording list 52. In S514, a display column settings list 56 for receiving a selection operation of what column to display on is displayed on the display device 40 as illustrated in FIG. 16. Columns correspond to the additional information column L2. This selection operation of the column receives by, for example, moving a cursor provided on the column using the operation unit 14 or a cursor key of the remote controller 15 and pressing a confirmation key. In S516, the reproduction list L1 is updated and displayed on the display device 40 so that the additional information column L2 of the selected program is provided on the selected column. The main control unit 10, for example, receives a content selection operation as shown in FIG. 9 (S418) when it has been determined that the settings process described above in S518 is finished, and executes the received process (S420). When it is determined that the settings process described above is not finished, the main control unit 10 returns the process to S506.

In S524 where "Register by actor" is selected, the main control unit 10 displays an actor entry screen 53 illustrated in FIG. 13 on the display device 40, and receives an operation entry of an actor name by the keys 14a and 15a. In S526, all programs including the entered actor name are searched for based on the additional information DA1 added to content CT1 recorded in the recording medium 30a. In S528, it is determined whether or not there are programs including the actor name. When there is a program including the actor name, the main control unit 10 advances the process to S514, displays the display column settings screen 56 on the display device 40, and updates and displays the reproduction list L1 on the display device 40 (S514 to S516). If there is no corresponding program, the main control unit 10 displays a no corresponding program screen not illustrated in the drawings on the display device 40 (S530), and advances the process to S518.

In S544 where "Register by genre" is selected, the main control unit 10 displays the genre selection screen 54 illustrated in FIG. 14 on the display device 40, and receives a selection operation of a genre by moving a cursor CR3 by the keys 14a and 15a. In S546, all programs of the selected genre are searched for based on the additional information DA1 added to content CT1 recorded in the recording medium 30a. Afterwards, the main control unit 10 determines whether or not there are programs of the genre (S528). When there is a program of the genre, the main control unit 10 advances the process to S514, displays the display column settings screen 56 on the display device 40, and updates and displays the reproduction list L1 on the display device 40 (S514 to S516).

In S564 where "Register by keyword" is selected, the main control unit 10 displays a keyword entry screen 55 illustrated in FIG. 15 on the display device 40, and receives an operation entry of a keyword by the keys 14a and 15a. In S566, all programs including the entered keyword are searched for based on the additional information DA1 added to content CT1 recorded in the recording medium 30a. Afterwards, the main control unit 10 determines whether or not there are programs including the keyword (S528). When there is a program including the keyword, the main control unit 10 advances the process to S514, displays the display column settings screen 56 on the display device 40, and updates and displays the reproduction list L1 on the display device 40 (S514 to S516).

By the above, this specific example can provide a useful reproduction list that is configured with additional information of content that is watched frequently.
It is still included in the present technique even when there is not one of the selection items illustrated in FIGS. 11 and 14.

### (8) Sixth example of a display control device, display device, and display control method:

FIG. 7 illustrates a sixth example of a content selection execution process that is performed mainly with the main control unit 10 according to one or more embodiments of the present invention. The reproduction list L1 of one or more embodiments of the sixth example is able to display sorted in order of most recent recording date, oldest recording date, number of times watched, and most recorded programs. By providing various methods of displaying the reproduction list L1, it becomes easier for the user to use the reproduction list L1.

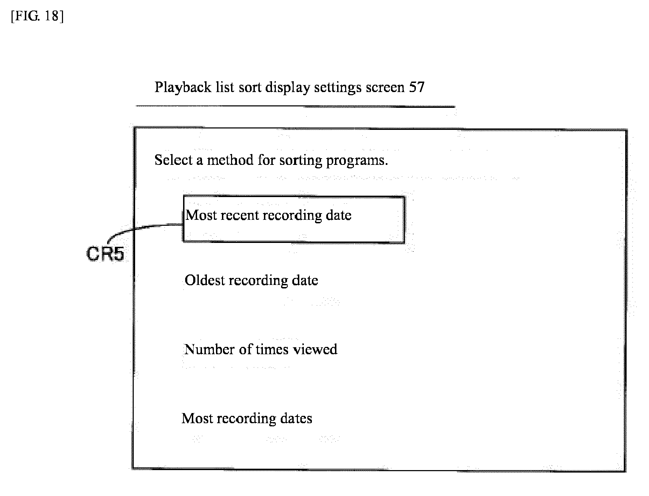

When processing is finished, the main control unit 10 extracts additional information DA1 that satisfies a plurality of conditions CN1 for an extraction object from among the additional information DA1 added to content CT1 recorded in the recording medium 30a (S602). In S604, the reproduction list L1 is created based on the extracted additional information DA1 and displayed in the display device 40 in the same manner as S304 and S404. In S606, a selection operation for the column to be sorted is received. Columns correspond to the additional information column L2. This selection operation of the column receives by, for example, moving a cursor CR4 provided on the column using the operation unit 14 or a cursor key of the remote controller 15 and pressing a confirmation key. In S608, a reproduction list sort display settings screen 57 illustrated in FIG. 18 is displayed on the display device 40 in the outer frame portion. On this screen 57, the order of "Most recent recording date", "Oldest recording date", "Number of times watched", or "Most recording dates" can be selected by moving a cursor CR5 by the keys 14a and 15a. "Order of most recording dates" is not in a column, and is a selection item for arranging the column in order of most recording dates.

When "Most recent recording date" is selected (S610), the main control unit 10 arranges the additional information DA1 in the column selected in S606 in order so that the recording date of the program at the very top is the most recent, and the recording date of the program at the very bottom is the oldest, and displays the additional information DA1 (S612). When "Oldest recording date" is selected (S620), the main control unit 10 arranges the additional information DA1 in the column selected in S606 in order so that the recording date of the program at the very top is the oldest, and the recording date of the program at the very bottom is the most recent, and displays the additional information DA1 (S622).
When "Number of times watched" is selected (S630), the main control unit 10 arranges the additional information DA1 in the column selected in S606 in order so that the program at the very top has the least number of times watched, and program at the very bottom has the most number of times watched, and displays the additional information DA1 (S632).
When "Most recording dates" is selected (S640), the main control unit 10 arranges the additional information column L2 in order so that the recording dates of the additional information column L2 farthest to the left are the greatest and the recording dates of the additional information column L2 farthest to the right are the least, and displays the additional information column L2 (S642).

The main control unit 10, for example, receives a content selection operation as shown in FIG. 9 (S418) when it has been determined that the settings process described above in S614 is finished, and executes the received process (S420). When it is determined that the settings process described above is not finished, the main control unit 10 returns the process to S610.
By the above, the main control unit 10 updates the additional information list L1 by receiving a selection operation of sort conditions of the additional information column L2, and sorting at least one of the additional information DA1 included in the additional information column L2 and the additional information column L2 based on selected sort conditions.

This specific example makes an operation for selecting content additionally easier because at least one of the additional information DA1 included in the additional information column L2 and the additional information column L2 is sorted.
It is still included in the present technique even when there is not one of the selection items illustrated in FIG. 18.

### (9) Other modified examples:

The order of each step of the processes described above may be changed as appropriate. For example, with the process in FIG. 10, the determination process of S522 may be performed before the determination process in S506.
The processes described above are included in the present technique even if there is not a process for receiving a selection operation of content of a processed object or a process for performing a predetermined process on the content.
The present technique is not limited to only a recording and reproduction device, but also includes a reproduction device without a recording function, a device that plays videos, a device that plays still images, and the like.

The additional information included in the additional information column described above in addition to the vertical direction, may be arranged in the horizontal direction, may be arranged in a direction 1° to 30° from the vertical direction, and may be arranged in a direction 1° to 30° from the horizontal direction. The additional information column in addition to the horizontal direction, may be arranged in the vertical direction, may be arranged in a direction 1° to 30° from the horizontal direction, and may be arranged in a direction 1° to 30° from the vertical direction.
Furthermore, a case when the conditions corresponding to the additional information column is not displayed with the additional information list is included in the present technique.

### (10) Conclusion:

As described above, according to one or more embodiments of the present invention, a technique can be provided that can ease the operation of selecting content. The basic functions and effects described above can also be achieved by a technique and the like composed only of configuration requirements according to the independent claims. In addition, certain "means" of the reproduction device described above may be implemented by a circuit or processor using known methods."

Furthermore, the present invention is not limited to the embodiments. For example, any of the below may be implemented.
- Replacing components, configurations, and the like disclosed in the embodiments that can be mutually replaced
- Replacing a member, configuration, and the like not disclosed in the embodiments but is a known technique mutually replaceable by a member, configuration, and the like disclosed in the embodiments
- Replacing a member, configuration, and the like not disclosed in the embodiments but can be conceivably achieved as a replacement for a member, configuration, and the like disclosed in the embodiments by a person skilled in the art based on a known technique or the like. These replaced aspects are also included in the present invention.
Although the disclosure has been described with respect to only a limited number of embodiments, those skilled in the art, having benefit of this disclosure, will appreciate that various other embodiments may be devised without departing from the scope of the present invention. Accordingly, the scope of the invention should be limited only by the attached claims.

### [REFERENCE NUMERALS]

1...Display control device, 10...Main control unit or controller,
14...Operation unit, 14a...Key, 15...Remote controller, 15a...Key,
30...Storage device, 30a...Recording medium,
31...Internal hard disk drive, 31a...hard disk,
32...External Hard disk drive, 32a...hard disk,
40...Display device, 41, 51 to 57...Screen,
CN1...Condition, CT1...Content, CR1 to CR5...Cursor,
D1...First predetermined direction, D2...Second predetermined direction,
DA1...Additional information, DA2...Recording method type information,
L1...List, L2...Additional information column,
P1... Display control program,
U1...Extracting means, U2...List display control means, U3...Content selecting means
U4...Content Processing means, U5...program list display control means

## Claims

1. A reproduction device (1) comprising:
a connector configured to connect the reproduction device (1) with an external display device (40); and
a controller (10) configured to
extract (S102) first additional information (DA1) included in a content (CT1) and that satisfies a first condition (CN1) from among additional information included in a plurality of contents recorded in a recording medium (30a),
create (S106) display data arranging, in a first direction (D1),
the first additional information (DA1), and
the first condition (CN1) associated with the first additional information (DA1), and
transmit (S110) the display data to the external display device (40).

2. The reproduction device (1) according to claim 1, wherein
the controller (10) is configured to
extract second additional information included in a content and that satisfies a second condition from among the additional information included in the plurality of contents,
create, as the display data, an additional information list in which the second condition and the second additional information are arranged in a second direction different from the first direction, and
transmit the additional information list to the external display device.

3. The reproduction device (1) according to claim 1 or 2, wherein
when the controller extracts no additional information that satisfies the first condition,
the controller (10) is configured to create the display data representing the first condition only, and to transmit the display data to the external display device.

4. The reproduction device (1) according to claim 2 or 3, wherein
the controller (10) is configured to
select a content from among contents displayed in the additional information list, and
perform a process on the selected content.

5. The reproduction device (1) according to any of claims 1 to 4, wherein
the first condition represents series information of a program, and
the controller (10) is configured to extract additional information corresponding to the series information from the additional information included in the plurality of contents.

6. The reproduction device (1) according to any of claim 2 to 5, wherein
the controller (10) is configured to
transmit a program list to the external display device,
select a condition to be included in the additional information list from the program list displayed on the external display device, and extracts additional information that satisfies the selected condition.

7. The reproduction device (1) according to any of claims 1 to 6, wherein
the first condition represents at least one of a program genre, an actor name, and a keyword.

8. The reproduction device (1) according to any of claims 1 to 7, wherein
when the first additional information includes additional information corresponding to a last episode of a program series, the controller (10) is configured to transmit to the external display device the display data that associates the first additional information with information representing including the last episode.

9. The reproduction device (1) according to any of claims 1 to 8, wherein
the recording medium stores recording method type information that indicates a type of a recording method of the content, and
the controller (10) is configured to transmit to the external display device the display data that associates the first additional information with information about the type of the recording method.

10. The reproduction device (1) according to claim 2, wherein
the controller (10) is configured to
select a sort condition for arranging at least one of: the first additional information; the second additional information; and information included in the first additional information or the second additional information, and
update the additional information list after sorting, based on the selected sort condition, at least one of: the first additional information; the second additional information; and the information included in the first additional information or the second additional information.

11. The reproduction device (1) according to claim 1, wherein
when the additional information indicates that the first additional information will be automatically deleted within a predetermined period of time, the controller transmits to the external display device the display data that comprises information indicating an automatic deletion.

12. A display device (40), comprising:
a display portion that displays
first additional information (DA1) included in a content (CT1) and that satisfies a first condition (CN1), and
the first condition (CN1) associated with the first additional information (DA1), wherein
the first additional information (DA1) is arranged in a first direction (D1).

13. The display device (40) according to claim 12, wherein
the display portion further displays
second additional information included in a content and that satisfies a second condition, and
the second condition associated with the second additional information, and
the second condition and the second additional information are arranged in a second direction different from the first direction.

14. The display device (40) according to claim 12, wherein
only the first condition is displayed when there is no additional information that satisfies the first condition.

15. A display control method, comprising:
extracting (S102) first additional information included in a content and that satisfies a first condition from among additional information included in a plurality of contents recorded in a recording medium;
creating display data arranging (S106), in a first direction,
the first additional information, and
the first condition associated with the first additional information; and
transmitting (S110) the display data to an external display device.
